# EUROPÄISCHE PATENTSCHRIFT

(11) **EP 0 642 004 B1**
(45) Veröffentlichungstag und Bekanntmachung des Hinweises auf die Patenterteilung: **25.03.1998**
(21) Anmeldenummer: 94810417.9
(22) Anmeldetag: 14.07.1994
(51) Int. Cl.: G01H 11/08, G01H 1/00, G10K 11/02

(54) **Schallemissionsaufnehmer**
Sound emission transducer
Capteur d'émission de son

(30) Priorität: 02.09.1993 CH 2609/93
(43) Veröffentlichungstag der Anmeldung: 08.03.1995
(73) Patentinhaber: K.K. HOLDING AG, CH-8408 Winterthur (CH)
(72) Erfinder: Cavalloni, Claudio, Dr., CH-8408 Winterhur (CH)

(56) Entgegenhaltungen:
- EP-A- 0 459 948
- EP-A- 0 572 349
- US-A- 4 011 473
- US-A- 4 189 655
- US-A- 5 029 474
- WERKSTATT UND BETRIEB, Bd. 127, Nr. 4, 1.April 1994, Seiten 248-252, XP000447955 CAVALLONI C ET AL: "NEUES SENSORDESIGN ALS BASIS OPTIMIERTER PROZESSUEBERWACHUNG NEW SENSOR DESIGN FOR OPTIMIZED PROCESS MONITORING"

## Beschreibung

Die Erfindung betrifft einen Schallemissionsaufnehmer. Bei automatisierten Bearbeitungsmaschinen spielen neben Bearbeitungskräften auch Maschinengeräusche oder Körperschall eine wichtige Rolle in der Ueberwachung von Bearbeitungsvorgängen. Bohrmaschinen-Ueberwachungsgeräte, welche Bohrerbruch auf Aenderung des Körperschallspektrums überwachen, existieren bereits. Gerade im Bereich der Feinbearbeitung bringen Körperschallmessungen zusätzliche Informationen zur Kraft- und Dehnungsmessung.

Die Körperschallmessung erfolgt mit einem Beschleunigungssensor. Ein solcher Sensor ist beschrieben in der europäischen Patentanmeldung 0 336 224 A1. Dieser Sensor dient der Prüfung eines Messobjektes, insbesondere eines Reaktorbehälters, enthält ein Piezoelement und eine seismische Masse und ist auf eine Resonanzfrequenz zwischen 1 kHz und 100 kHz abgestimmt. Zwischen dem Bauteil und dem Beschleunigungsaufnehmer ist als Koppelmittel beispielsweise ein weiches Blech angebracht, welches mit dem Messobjekt verschraubt ist.

Von Interesse ist jedoch nicht nur die Analyse von relativ niederfrequenten Schallwellen (Körperschall, 10 kHz bis ca. 20 kHz), sondern auch jene von hochfrequenten (Schallemission, bis ca. 2 MHz). Dies verlangt eine noch höhere Resonanzfrequenz und eine noch bessere Ankopplung des Schallemissionssensors. Im US-Patent 4,189,655 ist ein Beschleunigungssensor dargestellt, in welchem eine Membran mit einer seismischen Masse und einem piezoelektrischen Beschleunigungssensor verbunden ist. Die Ankopplung an die Messoberfläche erfolgt über eine Halbkugel, das Sensorgehäuse ist mit der Messoberfläche elastisch verbunden. Die Ankopplung des Sensors an die Messoberfläche erfolgt somit, im Gegensatz zu der vorliegenden Erfindung, ohne mechanische Vorspannung.

EP-A-0 572 349, das einen Stand der Technik gemäss Artikel 54 (3) EPÜ darstellt, beschreibt einen Schallemissionsaufnehmer mit einem Gehäuse, der eine Montageeinheit bildet, welche ein piezoelektrisches Element, eine Schalltransmissionsbasis mit Koppelmembran und eine das piezoelektrische Element und teilweise die Schalltransmissionsbasis umschliessende Vergussmasse umfasst. Die Koppelmembran liegt in einer Stufe des Gehäusebodens, dessen Bodenfläche bei ungespannter Koppelmembran einen Abstand vom Messobjekt hat. Bei der Montage des Schallemissionsaufnehmers am Messobjekt wird die Koppelungsmembran gespannt, so dass die Schalltransmissionsbasis mit einer genau definierten Kraft an die Oberfläche des Messobjekts gedrückt und angekoppelt wird.

Die Aufgabe der vorliegenden Erfindung ist es, die Montage eines solchen Schallemissionsaufnehmers zu vereinfachen. Dazu ist eine seitliche Partie des Gehäuses mit einer Bohrung versehen, mit welcher der Schallemissionsaufnehmer mittels einer Montageschraube am Messobjekt befestigt werden kann.

Die Erfindung wird im folgenden anhand von zwei Figuren näher beschrieben. Es zeigen:
- Fig. 1: einen erfindungsgemässen Schallemissionsaufnehmer, aufgeschraubt auf eine Messoberfläche (Querschnitt)
- Fig. 2: eine detaillierte Ansicht der in Fig. 1 eingekreisten Partie (vor dem Aufschrauben, d.h. vor dem Spannen der Membran).

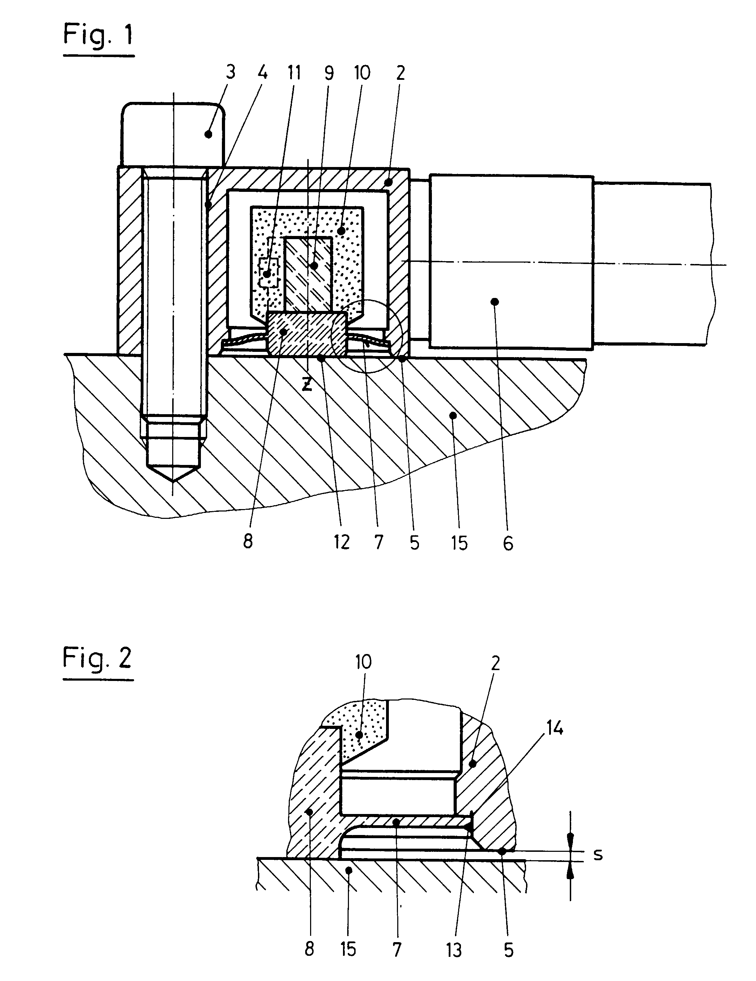

Fig. 1 zeigt einen erfindungsgemässen Schallemissionsaufnehmer, bestehend aus dem piezoelektrischen Messelement 9, der Schalltransmissionsbasis 8 mit Kopplungsmembran 7, der Vergussmasse 10 mit dem Parallelwiderstand 11, der auch extern angebracht sein oder fehlen kann. 2 bedeutet das Gehäuse, 5 die Bodenfläche, 6 den Stecker, der die Signalleitungen aufnimmt. Innerhalb des Gehäuses 2 können noch zusätzliche Elektronikteile wie Impedanzwandler angebracht sein. Das Piezoelement 9 kann ein polarisiertes Piezoelement aus gesinterter Keramik sein, dessen Polarisationsachse in der Hauptachse z des Systems liegt. Es kann aber auch ein zweckmässig geschnittener Einkristall aus einem piezoelektrischen Material, z.B. Quarz sein oder einer piezoelektrischen Polymerfolie, z.B. Polyvinylidenfluorid (PVDF), die beispielsweise auf ein Metallblech geklebt ist. Der Schallemessionsaufnehmer kann auch eine seismische Masse enthalten.

Der Aufnehmer wird mittels einer Montage schraube 3 auf der Oberfläche des Messobjektes 15 befestigt. Durch Anziehen der Montageschraube 3, die in einer Bohrung 4 einer seitlichen Partie des Gehäuses 2 liegt, wird der Boden des Gehäuses 2 gegen das Messobjekt 15 gespresst, die Koppelmembran 7 wird gespannt und als Folge davon wird auch die Schalltransmissionssbasis 8 gegen das Gehäuse gepresst. Dadurch, dass die Montageschraube 3 am Messelement 9 parallel vorbeigeführt ist, wird nur das Gehäuse 2 in Abhängigkeit des Schraubenanzugsmomentes auf die Oberfläche des Messobjektes 15 gepresst. Die Anpresskraft der Kopplungsmembran auf die Oberfläche des Messobjektes 15, die entscheidend die Qualität der akustischen Messung beeinflusst, wird nur durch einen geringen Ueberstand (s) der Kopplungsmembran 7 gegenüber dem Gehäuse 2 erreicht. Die Ankopplung ist unabhängig vom Anzugsmoment der Montageschraube 3, dies erlaubt konstante und reproduzierbare Ankopplungsverhältnisse. Durch die kleine Ankopplungsfläche 12 der Kopplungsmembran 7 werden relativ geringe Bearbeitungstolerenzen an die Montageoberfläche des Messobjekts 15 gestellt.
Die Befestigung des Aufnehmers an der Oberfläche des Messobjektes 15 kann, anstatt mit einer Schraube, auch mittels Magnet oder Klebung erfolgen.
Der für die Uebertragung hochfrequenter Schallwellen sehr wichtige Ankopplungsmechanismus des Schallemissionsaufnehmers ist detailliert in Fig. 2 dargestellt. Der gezeigte Ausschnitt ist in Fig. 1 mit einem Kreis bezeichnet. Die bereits verwendeten Referenznummern bedeuten dasselbe wie in Fig. 1. Die Schalltransmissionsbasis 8 trägt umfänglich eine Kopplungsmembran 7, die einer Senkung 14 des Gehäuses 2 anliegt und mit diesem verbunden, z.B. verschweisst ist. Die Membran 7 entkoppelt den Schallemissionsaufnehmer von den Kraft-, bzw. Dehnungssignalen. Vor der Ankopplung des Schallemissionsaufnehmers an das Messobjekt 15 befindet sich die Bodenfläche 5 des Gehäuses 2 in einem Abstand s von der Oberfläche des Gehäusebodens des Messobjektes 15. Das in Patentanspruch 6 dargestellte Ankopplungsverfahren verläuft so, dass durch Anziehen der Montageschraube 3 die Bodenfläche 5 auf das Messobjekt 15 gedrückt und daran befestigt wird, wodurch die Kopplungsmembran 7 gespannt und die Montagebasis 8 an die Oberfläche des Messobjektes 15 angekoppelt wird. Eine weitere Erhöhung der Anpresskraft auf das Gehäuse 2 verändert die Anpresskraft der Montagebasis 8 an das Messobjekt 15 nicht. Die Ankopplungsbedingungen bleiben definiert und konstant, was eine wesentliche Voraussetzung für die Bewertung der Schallemissionssignale zu diagnostischen Zwecken ist. Weiterhin ist gesichert, dass die Kopplungsmembran 7 vor Ueberlast und plastischer Deformation geschützt ist.

Der in Fig. 1 eingezeichnete elektrische Widerstand (parallel zum piezoelektrischen Messelement 9 liegend) bildet gemeinsam mit dem Messelement 9 ein RC-Glied (C: Kapazität des Messelementes 9), d.h. ein Hochpassfilter. Der Widerstand 9 kann, wie in der Figur dargestellt, in der Vergussmasse 10 integriert sein, er kann aber auch ausserhalb des Schallemissionsaufnehmers liegen. Durch Veränderung des Widerstandes 11 kann der herausgefilterte und auf den Vorverstärker gelangende Frequenzbereich eingestellt werden. Dies kann zusätzlich oder ausschliesslich auch dadurch geschehen, dass der Vorverstärker ein zuschaltbares Hochpassfilter enthält. Der Parallelwiderstand 11 kann somit auch fehlen.

Durch die dargelegte Erfindung wird der Schallemissionsaufnehmer miniaturisiert und bescnders durch ein neuartiges Ankopplungsverfahren im hochfrequenten Messbereich erheblich leistungsfähiger. Dadurch wercen insbesondere bei Werkzeugmaschinen neue Anwendungsmöglichkeiten erschlossen.

## Patentansprüche

1. Schallemissionsaufnehmer mit einem Gehäuse (2), der eine Montageeinheit bildet, welche ein piezoelektrisches Messelement (9), eine Schalltransmissionsbasis (8) mit Koppelmembran (7) und eine das piezoelektrische Messelement (9) umschliessende Vergussmasse(10) als Mindestbestandteile umfasst, wobei die Koppelmembran (7) in einer Senkung (14) des Gehäuses (2) liegt, dessen Bodenfläche (5) bei ungespannter Koppelmembran (7) einen Abstand (s) vom Messobjekt (15) hat, wobei ferner das Gehäuse (2) eine seitliche Partie mit einer Bohrung (4) besitzt zwecks Befestigung des Aufnehmers mittels einer Montageschraube (3), wodurch die Koppelmembran (7) vorgespannt wird und die Schalltransmissionsbasis (8) mit definierter Kraft gegen die Oberfläche des Messobjektes (15) gepresst wird, wobei die Anpresskraft derselben unabhängig vom Anzugsdrehmoment der Montageschraube (3) ist.

2. Aufnehmer nach Anspruch 1, dadurch gekennzeichnet, dass das piezoelektrische Element (9) aus einer axial polarisierten Piezokeramik besteht.

3. Aufnehmer nach einem der Ansprüche 1 oder 2, dadurch gekennzeichnet, dass die Montageeinheit (7,8,9,10) zusätzlich eine seismische Masse umfasst.

4. Aufnehmer nach einem der Ansprüche 1,2 oder 3, dadurch gekennzeichnet, dass die Montageeinheit (7,8,9,10) zusätzlich einen variablen elektrischen Widerstand (11) umfasst, welcher mit dem piezoelektrischen Element (9) ein Hochpassfilter bildet.

5. Messvorrichtung mit einem Aufnehmer nach einem der Ansprüche 1,2,3 oder 4, dadurch gekennzeichnet, dass der Vorverstärker ein zuschaltbares Hochpassfilter enthält.

6. Schallemissionsaufnehmer nach einem der Ansprüche 1 bis 4, dadurch gekennzeichnet, dass das Gehäuse (2) zusätzlich Elektronikbauteile enthält.

7. Ankopplungsverfahren für einen Schallemissionsaufnehmer nach einem der Ansprüche 1 bis 4, dadurch gekennzeichnet, dass die seitliche Partie mit der Bohrung (4) auf dem Messobjekt (15) mittels einer Montageschraube (3) befestigt wird, wodurch durch Anziehen der Montageschraube (3) die Bodenfläche (5) auf das Messobjekt (15) gedrückt, die Kopplungsmembran (7) gespannt und die Schalltransmissionsbasis (8) mit einer genau definierten Kraft an die Oberfläche des Messobjektes (15) angekoppelt wird.

## Claims

1. Acoustic emission transducer with a housing (2) forming an assembly unit comprising a piezoelectric measuring element (9), an acoustic transmission base (8) with coupling diaphragm (7), and an encapsulant (10) enclosing the piezoelectric measuring element (9) as indispensable components, whereby the coupling diaphragm (7) lies in a recess (14) of the housing (2) whose bottom surface (5) is at a distance (s) from the measuring object (15) when the coupling diagram (7) is unstressed, and the housing (2) has a side part with a hole (4) for fixing the transducer by means of a mounting screw (3), so that the coupling diaphragm (7) is preloaded and the acoustic transmission base (8) is pressed with defined force against the surface of the measuring object (15), its pressing force being unaffected by the tightening torque of the mounting screw (3).

2. Transducer according to claim 1, characterized by the piezoelectric element (9) consisting of an axially polarized piezoelectric ceramic.

3. Transducer according to one of claims 1 or 2, characterized by the assembly unit (7, 8, 9, 10) comprising a seismic mass additionally.

4. Transducer according to one of claims 1, 2 or 3, characterized by the assembly unit (7, 8, 9, 10) comprising a variable electrical resistor (11) additionally, which forms a high-pass filter with the piezoelectric element (9).

5. Measuring device with a transducer according to one of the claims 1, 2, 3 or 4, characterized by the preamplifier having a high-pass filter that can be switched in.

6. Acoustic emission transducer according to one of claims 1 to 4, characterized by the housing (2) containing additional electronic components.

7. Coupling procedure for an acoustic emission transducer according to one of claims 1 to 4, characterized by the side part with the hole (4) being fixed on the measuring object (15) so that when the mounting screw (3) is tightened, the bottom surface (5) is pressed onto the measuring object (15), the coupling diaphragm (7) is stressed, and the acoustic transmission base (8) is coupled to the surface of the measuring object (15) with an exactly defined force.

## Revendications

1. Capteur d'émission de son ou de bruit avec un boîtier (2) qui constitue une unité de montage qui comprend au minimum un élément de mesure piézo-électrique (9), un module de transmission de son ou de bruit (8) avec membrane de couplage (7) et une masse de moulage (10) qui englobe l'élément de mesure piézo-électrique (9), la membrane de couplage (7) reposant sur un épaulement (14) du boîtier (7) dont la surface d'appui (5) est située, lorsque la membrane (7) n'est pas contrainte, à une distance (s) de l'objet soumis à mesure (15), le boîtier (2) possédant, en outre, une partie latérale avec un alésage (4) permettant la fixation du capteur au moyen d'une vis de montage (3) engendrant la précontrainte de la membrane de couplage et le serrage du module de transmission du son ou du bruit (8) contre la surface de l'objet soumis à mesure (15) avec une force définie, cette force étant indépendante du couple de serrage de la vis de fixation (3).

2. Capteur selon revendication 1 caractérisé en ce que les éléments piézo-électriques (9) sont réalisés en céramique piézique polarisée axialement.

3. Capteur selon l'une des revendications 1 ou 2 caractérisé en ce que l'unité de montage (7, 8, 9, 10) possède, en plus, une masse sismique.

4. Capteur selon l'une des revendications de brevet 1, 2 ou 3 caractérisé en ce que l'unité de montage (7, 8, 9, 10) possède, en outre, une résistance électrique variable (11) qui constitue avec l'élément piézo-électrique (9) un filtre passe-haut.

5. Dispositif de mesure avec un capteur selon l'une des revendications 1, 2, 3 ou 4 caractérisé en ce que le pré-amplificateur possède un filtre passe-haut commutable selon le cas.

6. Capteur d'émission de son ou de bruit selon l'une des revendications de brevet 1 à 4 caractérisé en ce que le boîtier (2) contient, en plus, des composants électroniques.

7. Procédé de couplage d'un capteur d'émission de son ou de bruit selon l'une des revendications 1 à 4 caractérisé en ce que la partie latérale du capteur est fixée sur l'objet soumis à mesure (15) au moyen d'une vis de montage (3) passant au travers d'un alésage (4), le serrage de la vis de montage (3) provoquant le serrage de la face d'appui (5) sur l'objet soumis à mesure (15), la contrainte de la membrane de couplage et le couplage du module de transmission du son ou du bruit (8) avec la surface de l'objet soumis à mesure (15) avec une force définie avec précision.
